# EUROPEAN PATENT APPLICATION

(11) **EP 2 337 298 A1**
(43) Date of publication of application: **22.06.2011**
(21) Application number: 09306127.3
(22) Date of filing: 23.11.2009
(51) Int. Cl.: H04L 29/06, H04Q 3/00

(54) **R-IM-SSF gateway and method for translating IN protocol messages into SIP messages and vice versa**

(71) Applicant: Alcatel Lucent, 75008 Paris (FR)
(72) Inventor: Bultnick, Alain, 91620 Nozay (FR); Ballot, Jean-Marc, 91620 Nozay (FR); Capoen, Fabien, 91620 Nozay (FR)
(74) Representative: Chaffraix, Sylvain

(57) **Abstract**

A R-IM-SSF gateway (G) is intended for being part of a communication system comprising at least a circuit switched network (PN), with Intelligent Network capabilities, and IMS application servers (AS1-ASN) arranged for handling services offered to subscribers of this communication system and for communicating with the R-IM-SSF gateway (G) through SIP messages. This R-IM-SSF gateway (G) is distributed into instances that i) are associated to the subscribers, ii) are each capable of translating IN protocol messages and SIP messages exchanged between the circuit switched network (PN) and the IMS application servers (AS1-ASN) during Circuit Switch calls of subscribers, and iii) each act as a S-CSCF node for these IMS application servers (AS1-ASN), and as a SCP for the circuit switched network (PN), to allow the IMS application servers (AS1-ASN) to control underlying Circuit Switch calls of the subscribers.

## Description

The present invention relates to interworking between IMS ("IP Multimedia Subsystem") applications and legacy circuit switched (or CS) networks with Intelligent Network (IN) capabilities.

In legacy circuit switched networks, such as PSTNs ("Public Switched Telephone Networks") or some cellular (or mobile) networks, some services have been initially proposed and developed by private operators. This is notably the case of voice services which were developed by the operators LEX and TEX and which are handled by means of class 4/5 switches. Therefore it has been quite complicated for an operator to introduce new services, as these class 4/5 switches were not based on open platforms and did not allow third party development.

As it is known by the man skilled in the art, operators and manufacturers have decide to improve the situation by defining a more open architecture comprising an "Intelligent Network layer" (or IN layer), capable of controlling the leg establishment operated by the (class 4/5) switches, above the "(class 415) switch layer". The platforms dedicated to the Intelligent Network layer offering a development environment, it was easier for operators to develop quickly new (voice) services without disturbing their legacy underlying switches. So, in fixed environment this led to the definition by the ITU of protocols such as INAP CS1 ("Intelligent Network Application Part - Capability Set 1") and INAP CS2 ("Intelligent Network Application Part - Capability Set 2"), and in mobile environment these protocols (INAP CS1 and INAP CS2) have been adapted to mobile specificities and led to the definition of CAMEL standards ("Customized Application for Mobile network Enhanced Logic") in GSM/3GPP environment. This new architecture of Intelligent Networks (IN) has enabled operators to develop and deploy new innovative services such as prepaid services or VPN/VPBx services for enterprises ("Virtual Private Network / Virtual PABx).

The development of Internet has favored implementation of some new IP ("Internet Protocol") services in public operator networks. This is notably the case of the voice over IP (VoIP). In order to support these new services a new standardized architecture called IMS ("IP Multimedia Subsystem") has emerged. IMS mimics the IN architecture by clearly separating the session layer from the application layer by means of the ISC ("IMS Service Control") interface, which is based on the protocol called SIP ("Session Initialization Protocol").

The IMS architecture offering numerous advantages, a lot of IMS applications should be proposed in the coming years, while in the same time the legacy environment should disappear slowly. So, operators will have to face with the development/maintenance of their own applications in the IN and IMS environments during a long time. But, it is also possible to develop/maintain applications in the IMS environment, and to use a standard gateway that interfaces IN and IMS environments, and more precisely performs translations of ISC messages (of the IMS environment) into INAP/CAP/WIND messages (of the legacy IN environment) and vice versa. Such a standard gateway is called R-IM-SSF gateway ("Reverse - IMS - Service Switch Function") in the IMS session layer).

Unfortunately, some particular aspects are not mentioned in the literature and must be taken into account to fulfill deployment scenario needs. Firstly, it is of interest to propose a flexible and scalable architecture for the RIM-SSF function allowing its integration in an easy manner in both the legacy Circuit Switched domain and the IMS domain of an operator. Secondly, it is of interest to enable the legacy operators that do not have an IMS domain in their networks to run IMS applications without IMS environment.

So, the invention provides a R-IM-SSF gateway, intended to be part of a communication system comprising at least a circuit switched network (with Intelligent Network (IN) capabilities) and IP Multimedia Subsystem application servers, hereafter called IMS application servers and arranged for handling services offered to subscribers of this communication system and for communicating through SIP messages with this R-IM-SSF gateway, the later being distributed into instances that:
- are associated to the subscribers,
- are each capable of translating IN protocol messages and SIP messages exchanged between the circuit switched network and the IMS application servers during (establishment/release phases of) Circuit Switch call of subscribers, and
- each act as a Serving Call Session Control Function node, hereafter called S-CSCF, for the IMS application servers, and as a Service Control Point, hereafter called SCP, for the circuit switched network, to allow these IMS application servers to control underlying Circuit Switch calls of the subscribers.

The R-IM-SSF gateway according to the invention may include additional characteristics considered separately or combined, and notably :
- each of its instances may be associated to an R-IM-SSF instance identifier which is represented by a Session Control Function address contained into a Subscriber Information mark or an Intelligent Network Application Part mark (or INAP mark) which is stored into a storing means of a network equipment of the circuit switched network in correspondence with at least one identifier of a subscriber concerned by a Circuit Switch call;
   ➢ when the circuit switched network is of a mobile or cellular type, each of its instances may be associated to an R-IM-SSF instance identifier represented by a Session Control Function address contained into a Subscriber Information mark or an Intelligent Network Application Part mark (or INAP mark) which is stored into a storing means of a network equipment called Home Location Register (or HLR);
   ➢ when the circuit switched network is of a wired type, each of its instances may be associated to an R-IM-SSF instance identifier represented by a Session Control Function address contained into a Subscriber Information mark or an Intelligent Network Application Part mark (or INAP mark) which is stored into a storing means of a network equipment which is a class 5 PSTN switch intended for triggering the concerned SCP;
- when the communication system further comprises an IMS environment, each of its instances may be arranged for acting as an IMS S-CSCF node;
   ➢ it may be arranged for searching an IMS application server associated with a subscriber concerned by a Circuit Switch call, into a storing means of the IMS environment called Home Subscriber Server and which is arranged for storing each subscriber identifier in correspondence with an IMS application server identifier;

   • each of its instances may be associated to an R-IM-SSF instance identifier which is associated to at least one identifier of a subscriber concerned by a Circuit Switch call and put into a storing means of this IMS environment called Home Subscriber Server (or HSS);
      o each of its R-IM-SSF instances may be arranged for providing dynamically the Home Subscriber Server with its R-IM-SSF instance identifier when it has been triggered by an underlying Service Switch Function of the circuit switched network to control the Circuit Switch call of said subscriber;

      ➢ it may be arranged for detecting that particular received SIP messages are not related to underlying IN call control messages, and in this case to relay these particular SIP messages to a target R-IM-SSF gateway instance using IMS session level routing mechanisms;

   • these particular messages may be chosen from a group comprising at least a SIP SUBSCRIBE message and a SIP NOTIFY message;
      - when the communication system does not comprise any IMS environment, each of its instances may comprise an internal storing means intended for storing the identifier of each subscriber that is associated to it, in correspondence with an identifier of the IMS application server that is in charge of handling services for the considered subscriber;
      ➢ in order to offer a complete IMS environment to the IMS application servers, each of its instances may comprise a Sh based application data repository function dedicated to its associated subscribers and intended for storing data context of these subscribers for at least one IMS application server handling services of at least some of these subscribers;
      ➢ each of its instances may be arranged for detecting that particular received SIP messages are not related to underlying IN call control messages, and in this case for relaying these particular SIP messages to a R-IM-SSF gateway instance that serves a target subscriber;
         - these particular messages may be chosen from a group comprising at least a SIP SUBSCRIBE message and a SIP NOTIFY message;
         - each of its instances may comprise an additional internal storing means intended for storing, for each subscriber that it does not serve, the R-IM-SSF gateway instance identifier that serves this subscriber, in order to route sent SIP messages that are not related to underlying IN call control message directly to the target R-IM-SSF instance that serves the target subscriber;
         - each of its instances may be arranged for detecting that particular received SIP messages are not related to underlying IN call control messages, and in this case for broadcasting these particular SIP messages to all other R-IM-SSF gateways (present in the whole communication system);
- it may be arranged for converting IN protocol messages that are chosen from a group comprising at least INAP messages, CAP messages and WIND messages.

The invention also provides a method, intended for translating messages exchanged between a circuit switched network (with Intelligent Network (IN) capabilities) and IP Multimedia Subsystem application servers, hereafter called IMS application server and arranged for handling services offered to subscribers of this circuit switched network, and consisting:
- in distributing a R-IM-SSF gateway into instances associated to the subscribers and each acting as a Serving Call Session Control Function node, hereafter called S-CSCF, for the IMS application servers, and as a Service Control Point, hereafter called SCP, for the circuit switched network, and
- when a subscriber is concerned by a Circuit Switch call, in determining the R-IM-SSF gateway instance that is associated to this subscriber and the IMS application server handling services for this subscriber, and then in translating, by means of this determined R-IM-SSF gateway instance, IN protocol messages and SIP messages exchanged between the circuit switched network and the determined IMS application server to allow the latter to control the underlying Circuit Switch call of this subscriber.

Other features and advantages of the invention will become apparent on examining the detailed specifications hereafter and the appended drawings, wherein:
- figure 1 schematically illustrates a first example of communication system comprising a legacy circuit switched network coupled to an IMS domain through a R-IM-SSF gateway according to the invention, and
- figure 2 schematically illustrates a second example of communication system comprising a legacy circuit switched network comprising a R-IM-SSF according to the invention, coupled to IMS application servers.

The appended drawings may serve not only to complete the invention, but also to contribute to its definition, if need be.

The invention aims at offering a R-IM-SSF gateway, and an associated method, intended for translating messages exchanged into a communication system between a circuit switched network (PN), with Intelligent Network (or IN) capabilities, and IP Multimedia Subsystem application servers (ASj), to allow these IP Multimedia Subsystem application servers (ASj) to control underlying Circuit Switch calls.

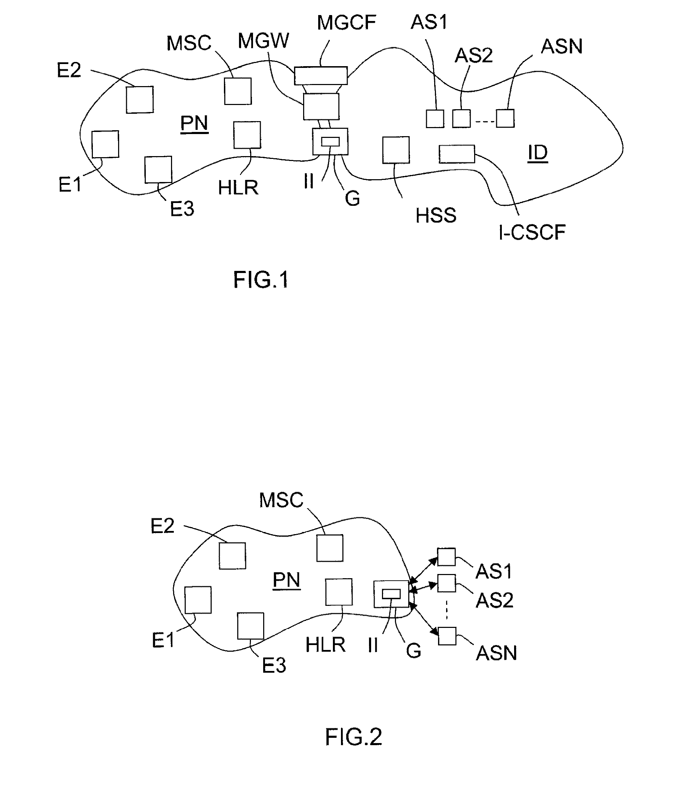

It is important to note that the invention concerns as well communication systems comprising a circuit switched network PN, with IN capabilities, and an IMS domain (or network or environment) ID, comprising IMS applications servers ASj (j = 1 to N, with N ≥1) coupled to the circuit switched network PN through a R-IM-SSF gateway G as illustrated in figure 1, as communication systems comprising a circuit switched network PN having IN capabilities and coupled to IMS applications servers ASj (j = 1 to N, with N ≥1) through a R-IM-SSF gateway G as illustrated in figure 2.

It is recalled that IMS application servers ASj are network equipments or elements arranged for handling services offered to subscribers (or subscribers) of the communication system, such as voice calls, for instance.

In the following description, it will be considered that the legacy circuit switched network PN is a PSTN network. But the invention is not limited to this type of network. Indeed, the invention concerns any type of circuit switched network having Intelligent Network (IN) capabilities, and notably some cellular (or mobile) CS networks (or domain), such as GSM, for instance.

Whatever the configuration of the considered communication system, its legacy circuit switched network PN is coupled to N IMS application servers ASj through a Reverse - IMS - Service Switch Function gateway G, hereafter called R-IM-SSF gateway and which comprises an IMS Service Control interface II, hereafter called ISC interface.

The R-IM-SSF gateway G, according to the invention, is arranged for communicating with the IMS application servers ASj and is distributed into one or more instances (each one being identified by its R-IM-SSF identifier).

According to the invention, each R-IM-SSF gateway instance:
- is associated to at least one subscriber,
- is capable of translating IN protocol messages and SIP messages that are exchanged between equipments Ei (here i = 1 to 3) of the legacy PSTN network PN (for instance class 4/5 nodes) and the IMS application servers ASj during Circuit Switch calls of the subscribers, and
- acts as a Serving Call Session Control Function node, hereafter called S-CSCF, for the IMS application servers ASj, and as a Service Control Point, hereafter called SCP, for the legacy PSTN network PN, to allow these IMS application servers ASj to control underlying Circuit Switch calls of the subscribers.

So, each R-IM-SSF gateway instance is capable of translating i) IN protocol messages, coming from equipments Ei of the legacy PSTN network PN and intended to IMS application servers ASj, into SIP messages, and ii) SIP messages, coming from IMS application servers ASj and intended to equipments Ei of the legacy PSTN network PN, into IN protocol messages.

The R-IM-SSF gateway G intervenes each time an equipment Ei of the legacy PSTN network PN is triggered by a detection point (or DP) to send an IN protocol message (which is translated and sent to an IMS application server ASj), or each time an IMS application server ASj has to send a message to an equipment Ei of the legacy PSTN network PN. For instance, this chosen application may be in charge of voice calls. For instance, a R-IM-SSF gateway instance intervenes when an IMS application has to control the setting of a dynamic detection point (or DP) during a Cicuit Switch call establishment, or when a service offered by an IMS application implies an action because a called subscriber does not answer a call, or else when a service offered by an IMS application requires underlying leg manipulations.

Each R-IM-SSF instance may be associated to an R-IM-SSF instance identifier which is represented by a Session Control Function (or SCF) address contained into a Subscriber Information mark (for instance of the CAMEL type (or CSI)) or an Intelligent Network Application Part mark (or INAP mark) which is stored into a storing means of a network equipment of the circuit switched network in correspondence with at least one identifier of a subscriber concerned by a Circuit Switch call.

Each R-IM-SSF gateway instance can be arranged for translating IN protocol messages of the INAP type (used in fixed environment) and/or CAP or WIND type (used in cellular (or mobile) environment).

It is recalled that a S-CSCF is the first access to IMS services for a subscriber. So, it is coupled to one or more IMS application servers ASj. It is a session control equipment or element which is notably in charge of authenticating the subscribers and of storing the address of the Proxy-Call Session Control Function (or P-CSCF) to which is coupled an IMS subscriber (in an IMS environment). In an IMS environment ID (see figure 1), a S-CSCF is coupled to a network element called Home Subscriber Server (or HSS) in order to retrieve subscriber information that is stored in it and to store the known addresses of these subscribers. Moreover, in an IMS environment a S-CSCF cooperates with the HSS and another session control network element or equipment, called Interrogating-Call Session Control Function (or I-CSCF), during the IMS registration and subsequent IMS communication phase(s) for a subscriber in the IMS environment ID.

It is also recalled that a SCP is a network equipment or element of a legacy CS network PN that is arranged for controlling services offered to subscribers of this legacy CS network PN.

It is also recalled that, in an IMS ISC environment, the IMS application that handles a call for a calling subscriber or a called subscriber is always in the path of the whole underlying SIP INVITE transaction, both for calling subscriber leg and called subscriber leg.

It is also recalled that, when an Intelligent Network (or IN) voice application is triggered in a CS network PN during a call establishment phase for a calling subscriber or a called subscriber (by means of an "INIT DP message"), it can define with some granularity how it wants to participate to following call establishment / release transactions through the positioning of dynamic detection points (by means of a Request Report Basic Call State Mode (or RRBCSM) message). In this case the IN application can indicate for each following dynamic detection point:
- "Answer" (during a call establishment phase - this corresponds to the "OK" message of a SIP INVITE transaction),
- "Disconnect" (leg 1) (during a call liberation phase - this corresponds to a "BYE" message initiated by a calling subscriber),
- "Disconnect" (leg 2) (during a call liberation phase - this corresponds to a "BYE" message initiated by a called subscriber),
- "Abandon" (leg 1) (during a call establishment phase - this corresponds to a "CANCEL" message initiated by a calling subscriber),
- "Route Selection Failure" (during a call establishment phase - this corresponds to an "INVITE" message aborted by a CSCF layer),
- "Called Party Busy",
- "No Answer".

The IN application can also mention whether it wants to be only notified (i.e. a dynamic detection point set in "notified" mode) or be master for the continuation of the transaction (i.e. a dynamic detection point set in "request" mode).

The distribution of the R-IMS-SSF gateway G and of the IMS application servers ASj dedicated to the subscribers depends of the constitution of the considered communication system: either a pure legacy CS environment (i.e. a legacy circuit switched network PN without IMS environment ID), or a mixed environment (i.e. a legacy circuit switched network PN coupled to an IMS environment ID).

In a mixed environment (i.e. when there is also an IMS environment ID) (see figure 1), each R-IM-SSF instance preferably emulates a separate IMS S-CSCF node, and the address of the IMS application server ASj associated with a subscriber is preferably stored in the HSS.

Each R-IM-SSF instance may be associated to an R-IM-SSF instance identifier which is associated to at least one identifier of a subscriber concerned by a Circuit Switch call and which is put into the HSS. So, in case where there is an IMS environment ID (figure 1), each R-IMS-SSF gateway instance is arranged for providing dynamically the HSS with its identifier when it has been triggered by an underlying Service Switch Function (or SSF) of the legacy PSTN network PN to control the Circuit Switch call of a subscriber.

In a pure CS environment, each R-IM-SSF instance preferably emulates more than a IMS S-CSCF node. So, each R-IM-SSF instance may comprise an internal storing means which is intended for storing the identifier of each subscriber that is associated to it in correspondence with an identifier of the IMS application server ASj that is in charge of handling services for the considered subscriber.

When the circuit switched network PN is of a mobile or cellular type, each of the R-IMS-SSF instances can be associated to an R-IM-SSF instance identifier which is stored into a storing means of a network equipment called Home Location Register HLR.

When the circuit switched network PN is of a wired type, each of the R-IMS-SSF instances can be associated to an R-IM-SSF instance identifier which is stored into a storing means of a network equipment which is a class 5 PSTN switch Ei intended for triggering the concerned SCP.

In order to offer voice communication between its legacy CS subscribers and its IMS subscribers the communication system may comprise (as illustrated in figure 1) a media controller (or MGCF) and a Media Gateway (or MGW) offering respectively circuit switch calls and VoIP IMS calls.

An example of intervention of the R-IM-SSF gateway G in the above described case is detailed hereafter.

When a R-IM-SSF gateway instance is triggered by the underlying SSF function (due to a terminating call related detection point (DP) or an originating call related detection point) through a CAP INIT_DP message or an INAP INIT_DP message, this R-IM-SSF gateway instance fetches in the HSS through the Cx interface the Initial Filter Criteria Attribute (or iFC) value which is attached to the concerned legacy CS subscriber. This iFC value contains the address of the IMS application server(s) that handle(s) the originating or terminating subscriber session.

Then the R-IMS-SSF gateway instance can call this/these IMS application server(s) ASj through its ISC interface II to run the subscriber services that are handled by this/these IMS application server(s) ASj. Then, each concerned IMS application server ASj instructs the R-IM-SSF gateway instance in return of the following behavior of the call (for instance propagate the call to the called subscriber number, or forward the call to a voice mail, or else propagate the call to an IVR ("Interactive Voice Responder") equipment). Then the R-IM-SSF gateway instance can answer to the received CAP or INAP INIT-DP message with the appropriate IN protocol message ("CONTINUE" or "CONNECT to Resource", for instance).

It is important to note that an IMS application server ASj can use the Sh interface to store and/or retrieve the subscriber related service data that is stored in the HSS.

In case where there is a pure CS network (figure 2), in order to offer an apparent complete IMS environment to the IMS application server ASj, each R-IMS-SSF gateway instance may comprise a Sh based application data repository function which is dedicated to its associated subscribers and which is intended for storing service data of these subscribers for at least one IMS application server ASj handling services of at least some of these associated subscribers. For instance, each R-IMS-SSF instance may comprise an additional internal storing means intended for storing, for each subscriber that it does not serve, the R-IM-SSF gateway instance identifier that serves this subscriber. In this case, each R-IMS-SSF instance can be arranged for detecting that particular received SIP messages are not related to underlying IN call control messages. So, in this case each R-IMS-SSF instance can relay these particular SIP messages to a R-IM-SSF gateway instance using the additional internal storing means.

Now, if a R-IM-SSF instance does not comprise an additional internal storing means, it can be arranged for detecting that particular received SIP messages are not related to underlying IN call control messages, and then to broadcast these particular SIP messages to all other R-IM-SSF gateways.

These particular messages can be SIP SUBSCRIBE messages or SIP NOTIFY messages, for instance.

An example of intervention of the R-IM-SSF gateway G in the above described case is detailed hereafter.

When a R-IM-SSF gateway instance is triggered by the underlying SSF function (due to a terminating call related detection point (DP) or an originating call related detection point) through a CAP INIT_DP message or an INAP INIT_DP message, this R-IM-SSF gateway instance looks up in its internal subscriber database to retrieve the iFC value which is attached to the concerned legacy CS subscriber and which designates one or more IMS application server(s) ASj.

Then the R-IMS-SSF gateway instance can call this/these IMS application server(s) ASj through its ISC interface II to run the subscriber services that are handled by this/these IMS application server(s) ASj. Then, each concerned IMS application server ASj instructs the R-IM-SSF gateway instance in return of the following behavior of the call (for instance propagate the call to the called number, or forward the call to a voice mail, or else propagate the call to an IVR). Then the R-IM-SSF gateway instance can answer to the received CAP or INAP INIT_DP message with the appropriate IN protocol message ("CONTINUE" or "CONNECT to Resource", for instance).

Some non limiting examples of translation are described hereafter. In these examples, one assumes that a legacy CS subscriber is handled by only one IMS application server ASj, such as an IMS Telephony Application Server (or TAS) that can offer voice residential services or more sophisticated Virtual PBX/VPN features, for instance.

A first example concerns a case where the circuit switched network PN is a mobile (or cellular) network. One assumes here that there is a 0-CSI (or Origin CSI) mark for the calling subscriber, and that the TAS ASj detects that the call can be continued to the called subscriber without other treatment (no barring condition, for instance). The called subscriber can be a fixed or mobile subscriber without any mark.

In this case, an (originating) V-MSC (of the legacy CS network PN) detects an originating call for a calling subscriber that has an Origin CSI mark. This V-MSC triggers the concerned R-IM-SSF gateway instance (SCP address) through an INIT-DP CAMEL message (above the "TC_Begin TCAP transaction"). This INIT-DP CAMEL message contains the calling subscriber number and the called subscriber number.

It is recalled that a V-MSC (« Visited Mobile Service Switching Centre ») handles the switching of CS communication (or calls) of subscribers that are attached to it.

In a mixed environment the concerned R-IM-SSF gateway instance retrieves the iFC value (which designates the TAS) from the HSS, while in a pure legacy CS environment the concerned R-IM-SSF gateway instance retrieves the iFC value (which designates the TAS) from its internal subscriber database.

Then the concerned R-IM-SSF gateway instance sends a SIP Invite message with the calling subscriber and called subscriber numbers through the ISC interface II. Parameters of the SIP INVITE message are translated from the parameters of the received INIT-DP CAMEL message.

Depending on its implementation the TAS retrieves the subscriber service data from its internal database or fetches the subscriber service data through the Sh interface.

In view of the assumptions, the TAS decides that the CS call can be propagated to the called subscriber. So, it answers on the ISC interface with a SIP INVITE message toward the called subscriber number.

Then the concerned R-IM-SSF gateway instance translates this SIP INVITE message (received onto the ISC interface II) in two CAP messages: a RRBCSM ("Request Report Basic Call State Mode") message to position the dynamic trigger points for the call (which are associated to future call events on which the R-IM-SSF gateway instance wants to be triggered), and a CONNECT message that instructs the V-MSC to continue the CS call normally toward the called subscriber. Then the V-MSC continues the normal handling of the CS call toward the called subscriber number (by means of an ISUP IAM message).

At the end of the call establishment phase, the V-MSC detects the answer of the called subscriber when it receives an ISUP ANM message. This last message constitutes a triggering call event that has been positioned by the RRBCSM message. So, the (originating) V-MSC triggers the R-IM-SSF gateway instance to notify that the call is now established.

Then the R-IM-SSF gateway instance answers positively to the SIP INVITE transaction initiated by the TAS to signal that the call leg is established.

Then the TAS answers positively to the SIP INVITE transaction initiated by the R-IM-SSF gateway instance to confirm that the call leg has been established.

Then there is a finalization of the three way SIP INVITE transaction.

A second example concerns a terminating call. One assumes here that there is a T-CSI (or Terminating CSI) mark for the called subscriber, and that the TAS ASj detects that the call can be continued to the called subscriber without other treatment (no diversion condition, for instance). The calling subscriber can be a fixed or mobile subscriber without any mark.

In this case, a (terminating) V-MSC (of the legacy CS network PN) detects an terminating call for a called subscriber that has a Terminating CSI mark. This V-MSC triggers the concerned R-IM-SSF gateway instance (SCP address) through an INIT-DP CAMEL message (above the "TC_Begin TCAP transaction"). This INIT-DP CAMEL message contains the calling subscriber number and the called subscriber number.

In a mixed environment the concerned R-IM-SSF gateway instance retrieves the iFC value (which designates the TAS) from the HSS, while in CS environment the concerned R-IM-SSF gateway instance retrieves the iFC value (which designates the TAS) from its internal subscriber database.

Then the concerned R-IM-SSF gateway instance sends a SIP INVITE message with the calling subscriber and called subscriber numbers through the ISC interface II. Parameters of the SIP INVITE message are translated from the parameters of the received INIT-DP message.

Depending on its implementation the TAS retrieves the subscriber service data from its internal database or fetches the subscriber service data through the Sh interface.

In view of the assumptions, the TAS decides that the CS call can be propagated to the called subscriber. So, it answers on the ISC interface with a SIP INVITE message toward the called subscriber number.

Then the concerned R-IM-SSF gateway instance translates this SIP INVITE message (received onto the ISC interface II} in two CAP messages: a RRBCSM ("Request Report Basic Call State Mode") message to position the dynamic trigger points for the call (which are associated to future call events on which the R-IM-SSF gateway instance wants to be triggered), and a CONNECT message that instructs the V-MSC to continue the CS call normally toward the called subscriber. Then the V-MSC continues the normal handling of the CS call toward the called subscriber number (by means of an ISUP IAM message).

At the end of the call establishment phase, the (terminating) V-MSC detects the answer of the called subscriber when it receives a CALL CONFIRM message. This last message constitutes a triggering call event that has been positioned by the RRBCSM message. So, the V-MSC triggers the R-IM-SSF gateway instance to notify that the call is now established.

Then the R-IM-SSF gateway instance answers positively to the SIP INVITE transaction initiated by the TAS to signal that the call leg is established.

Then the TAS answers positively to the SIP INVITE transaction initiated by the R-IM-SSF gateway instance to confirm that the call leg has been established.

Then there is a finalization of the three way SIP INVITE transaction.

A third example concerns an originating call with SRP ("Service Resource Point") node needed for playing announcement. One assumes here that there is a 0-CSI (or Origin CSI) mark for the calling subscriber, and that the TAS ASj detects that the call must be barred due to the called subscriber number and decides to play an announcement to the calling subscriber (and then to close the call establishment phase). The called subscriber can be a fixed or mobile subscriber without any mark.

In this case, an (originating) V-MSC (of the legacy CS network PN) detects an originating call for a calling subscriber that has an Origin CSI mark. This V-MSC triggers the concerned R-IM-SSF gateway instance (SCP address) through an INIT-DP CAMEL message (above the "TC_Begin TCAP transaction"). This INIT-DP CAMEL message contains the calling subscriber number and the called subscriber number.

In a mixed environment the concerned R-IM-SSF gateway instance retrieves the iFC value (which designates the TAS) from the HSS, while in a legacy CS environment the concerned R-IM-SSF gateway instance retrieves the iFC value (which designates the TAS) from its internal subscriber database.

Then the concerned R-IM-SSF gateway instance sends a SIP Invite message with the calling subscriber and called subscriber numbers through the ISC interface II. Parameters of the SIP INVITE message are translated from the parameters of the received INIT-DP CAMEL message.

Depending on its implementation the TAS retrieves the subscriber service data from its internal database or fetches the subscriber service data through the Sh interface.

In view of the assumptions, the TAS decides that the CS call must be barred (for instance, the subscriber is not authorized to place an international call). So, it decides to play an announcement that explains the nature of the interdiction to the subscriber. For that, the TAS sends a SIP ISC INVITE message using a URL syntax that explicitly identifies a media resource as the SIP end-point (in conformance with the IETF RFC 4240, for instance "SIP:annc@server-x-domain-operator.net").

Then the concerned R-IM-SSF gateway instance parses the message and detects that the end-point to connect is a media resource server (called SRP (Service Resource Point)) of the legacy CS environment PN. Then the concerned R-IM-SSF gateway instance traduces the media SIP resource address (here server-x-domain.operator.net) in the corresponding E.164 address of the SRP. Then the concerned R-IM-SSF gateway instance translates the SIP INVITE message in three CAP messages: a RRBCSM (Request Report Basic Call State Mode) message to position the dynamic trigger points for the call (which are associated to future call events on which the R-IM-SSF gateway instance wants to be triggered), a CTR ("Connect To Resource") message to instruct the V-MSC to continue the CS call normally toward the SRP identified with the E.164 address, and a PA ("Play Announcement") message to identify the message to play. Then the V-MSC continues the normal handling of the CS call toward the called subscriber number (by means of an ISUP IAM message).

At the end of the call establishment phase, the (originating) V-MSC detects the answer of the called subscriber when it receives an ISUP ANM message. This last message constitutes a triggering call event that has been positioned by the RRBCSM message. So, the (originating) V-MSC triggers the R-IM-SSF gateway instance to notify that the call is now established.

Then the R-IM-SSF gateway instance answers positively to the SIP INVITE transaction initiated by the TAS to signal that the call leg is established.

Then the TAS answers positively to the SIP INVITE transaction initiated by the R-IM-SSF gateway instance to confirm that the call leg has been established.

Then there is a finalization of the three way SIP INVITE transaction. A fourth example concerns a CS environment PN with a special distributed R-IM-SSF gateway behavior which offers an IMS application server ASj to IMS application server ASj' communication non related to a call.

The distributed R-IM-SSF gateway G offers a mapping between i) the SIP session establishment paradigm based on the SIP INVITE transaction model, and ii) the legacy CS call control establishment based on legacy UNI/NNI (User To Network Interface / Network To Network Interface), such as Q.931/ISUP in fix environment or 3GPP TS 24.008/ISUP in mobile environment, for instance.

The distributed R-IM-SSF gateway G can be arranged for detecting that particular received SIP messages are not related to underlying IN call control messages. In this case it relays these particular SIP messages to an R-IM-SSF gateway instance using IMS session level routing mechanisms.

These particular messages may be SIP SUBSCRIBE messages or SIP NOTIFY messages, for instance.

Moreover voice IMS applications can utilize also some "non call related" SIP transactions in order to communicate with other IMS applications. Indeed, they may offer CCBS service (Call Completion on Busy Subscriber). In this case the TAS ASj in charge with the calling subscriber service handling asks the TAS ASj' in charge with the called subscriber service handling to be notified when the called subscriber is becoming free to accept a new call. They may also offer a "smart routing". In this case the TAS ASj can behave as a "Presence Watcher" and can ask an IMS application server ASj' to be notified about the accessibility state of a set of called subscribers.

These services can be realized through SIP SUBSCRIBE transactions and SIP Notification transactions that have no equivalent service in the underlying legacy CS network PN. So, if the communication system comprises an IMS environment ID, the messages of these SIP transactions can be relayed naturally between the underlying IMS CSCF layer (S-CSCF, I-CSCF, HSS). If the communication system does not comprise an IMS environment ID, the concerned R-IM-SSF gateway instance can ensure the routing of these SIP transactions as mentioned hereafter.

When there is a SIP message transaction other than a SIP INVITE transaction, the concerned R-IM-SSF gateway instance can broadcast the SIP messages to all the other R-IM-SSF gateway instances. So, the R-IM-SSF gateway instance which is in charge of the subscriber answer handles the overall transaction.

The invention can also be considered in terms of a method for translating messages exchanged between a circuit switched network PN, with IN capabilities, and IMS application servers ASj. Such a method may be implemented by means of a R-IM-SSF gateway G such as the ones above described with reference to figures 1 and 2. Therefore, only its main characteristics will be mentioned hereafter.

The method according to the invention consists:
- in distributing a R-IM-SSF gateway G into instances associated to the subscribers and each acting as a S-CSCF for the IMS application servers ASj, and as a SCP for the circuit switched network PN, and
- when a subscriber is concerned by a Circuit Switch call, in determining the R-IM-SSF gateway instance which is associated to this subscriber and the IMS application server ASj handling services for this subscriber, and then in translating, by means of this determined R-IM-SSF gateway instance, IN protocol messages and SIP messages exchanged between the circuit switched network PN and this determined IMS application server ASj to allow the latter ASj to control the underlying Circuit Switch call of this subscriber.

The invention is not limited to the embodiments of R-IM-SSF gateway and method described above, only as examples, but it encompasses all alternative embodiments which may be considered by one skilled in the art within the scope of the claims hereafter.

## Claims

1. R-IM-SSF gateway (G) for a communication system comprising at least a circuit switched network (PN), with Intelligent Network capabilities, and IP Multimedia Subsystem application servers (ASj) hereafter called IMS application servers and arranged for handling services offered to subscribers of said communication system and for communicating with said R-IM-SSF gateway (G) through SIP messages, **characterized in that** it is distributed into instances that i) are associated to said subscribers, ii) are each capable of translating IN protocol messages and SIP messages exchanged between said circuit switched network (PN) and said IMS application servers (ASj) during Circuit Switch calls of subscribers, and iii) each act as a Serving Call Session Control Function node, hereafter called S-CSCF, for said IMS application servers (ASj), and as a Service Control Point, hereafter called SCP, for said circuit switched network (PN), to allow said IMS application servers (ASj) to control underlying Circuit Switch calls of said subscribers.

2. R-IM-SSF gateway according to claim 1, **characterized in that** each of its instances is associated to an R-IM-SSF instance identifier which is represented by a Session Control Function address contained into a Subscriber Information mark or an Intelligent Network Application Part mark which is stored into a storing means of a network equipment of said circuit switched network (PN) in correspondence with at least one identifier of a subscriber concerned by a Circuit Switch call.

3. R-IM-SSF gateway according to claim 2, **characterized in that**, when said circuit switched network (PN) is of a mobile or cellular type, each of its instances is associated to an R-IM-SSF instance identifier represented by a Session Control Function address contained into a Subscriber Information mark or an Intelligent Network Application Part mark which is stored into a storing means of a network equipment called Home Location Register (HLR).

4. R-IM-SSF gateway according to claim 2, **characterized in that**, when said circuit switched network (PN) is of a wired type, each of its instances may be associated to an R-IM-SSF instance identifier represented by a Session Control Function address contained into a Subscriber Information mark or an Intelligent Network Application Part mark which is stored into a storing means of a network equipment which is a class 5 PSTN switch intended for triggering the concerned SCP.

5. R-IM-SSF gateway according to claim 1, **characterized in that**, when said communication system further comprises an IMS environment (ID), each of its instances is arranged for acting as an IMS S-CSCF node.

6. R-IM-SSF gateway according to 5, **characterized in that** it is arranged for searching an IMS application server (ASj) associated with a subscriber concerned by a Circuit Switch call, into a storing means (HSS) of said IMS environment (ID) called Home Subscriber Server and which is arranged for storing each subscriber identifier in correspondence with an IMS application server identifier.

7. R-IM-SSF gateway according to claim 6, **characterized in that** each of its instances is associated to an R-IM-SSF instance identifier which is associated to at least one identifier of a subscriber concerned by a Circuit Switch call and put into said Home Subscriber Server (or HSS).

8. R-IM-SSF gateway according to claim 7, **characterized in that** each of its R-IM-SSF instances is arranged for providing dynamically said Home Subscriber Server (HSS) with its of its R-IM-SSF instance identifier when it has been triggered by an underlying Service Switch Function of said circuit switched network (PN) to control the Circuit Switch call of said subscriber.

9. R-IM-SSF gateway according to claim 5, **characterized in that** it is arranged for detecting that particular received SIP messages are not related to underlying IN call control messages, and in this case to relay these particular SIP messages to an R-IM-SSF gateway instance using IMS session level routing mechanisms.

10. R-IM-SSF gateway according to claim 9, **characterized in that** said particular messages are chosen from a group comprising at least a SIP SUBSCRIBE message and a SIP NOTIFY message.

11. R-IM-SSF gateway according to claim 1, **characterized in that**, when said communication system does not comprise an IMS environment (ID), each of its instances comprises an internal storing means intended for storing the identifier of each subscriber that is associated to it in correspondence with an identifier of the IMS application server (ASj) that is in charge of handling services for the considered subscriber.

12. R-IM-SSF gateway according to claim 11, **characterized in that** each of its instances comprises a Sh based application data repository function dedicated to its associated subscribers and intended for storing data context of these subscribers for at least one IMS application server (ASj) handling services of at least some of said subscribers.

13. R-IM-SSF gateway according to claim 11 , **characterized in that** each of its instances is arranged for detecting that particular received SIP messages are not related to underlying IN call control messages, and in this case for relaying these particular SIP messages to a R-IM-SSF gateway instance that serves a target subscriber.

14. R-IM-SSF gateway according to claim 13, **characterized in that** said particular messages are chosen from a group comprising at least a SIP SUBSCRIBE message and a SIP NOTIFY message.

15. R-IM-SSF gateway according to one of claims 13 and 14, **characterized in that** each of its instances comprises an additional internal storing means intended for storing, for each subscriber that it does not serve, the R-IM-SSF gateway instance identifier that serves this subscriber, in order to route sent SIP messages that are not related to underlying IN call control message directly to the target R-IM-SSF instance that serves the target subscriber.

16. R-IM-SSF gateway according to one of claims 13 and 14, **characterized in that** each of its instances is arranged for detecting that particular received SIP messages are not related to underlying IN call control messages, and in this case for broadcasting these particular SIP messages to all other R-IM-SSF gateways.

17. R-IM-SSF gateway according to one of claims 1 to 16, **characterized in that** it is arranged for converting IN protocol messages that are chosen from a group comprising at least INAP messages, CAP messages and WIND messages.

18. Method for translating messages exchanged between a circuit switched network (PN), with Intelligent Network capabilities, and IP Multimedia Subsystem application servers (ASj), hereafter called IMS application server and arranged for handling services offered to subscribers of said circuit switched network (PN), **characterized in that** it consists i) in distributing a RIM-SSF gateway (G) into instances associated to said subscribers and each acting as a Serving Call Session Control Function node, hereafter called S-CSCF, for said IMS application servers (ASj), and as a Service Control Point, hereafter called SCP, for said circuit switched network (PN), and ii) when a subscriber is concerned by a Circuit Switch call, in determining the R-IM-SSF gateway instance associated to this subscriber and the IMS application server (ASj) handling services for said subscriber, and then in translating, by means of said determined R-IM-SSF gateway instance, IN protocol messages and SIP messages exchanged between said circuit switched network (PN) and said determined IMS application server (ASj) to allow the latter (ASj) to control the underlying Circuit Switch call of said subscriber.

19. Method according to claim 18, **characterized in that** said IN protocol is chosen from a group comprising at least INAP, CAP and WIND.

## Amended claims

### Amended claims in accordance with Rule 137(2) EPC.

**1.** R-IM-SSF gateway (G) for a communication system comprising at least a circuit switched network (PN), with Intelligent Network capabilities, and IP Multimedia Subsystem application servers (ASj) hereafter called IMS application servers and arranged for handling services offered to subscribers of said communication system and for communicating with said R-IM-SSF gateway (G) through SIP messages, **characterized in that** said gateway is distributed into instances that i) are associated to said subscribers, ii) are each capable of translating IN protocol messages and SIP messages exchanged between said circuit switched network (PN) and said IMS application servers (ASj) during Circuit Switch calls of subscribers, and iii) each act as a Serving Call Session Control Function node, hereafter called S-CSCF, for said IMS application servers (ASj), and as a Service Control Point, hereafter called SCP, for said circuit switched network (PN), to allow said IMS application servers (ASj) to control underlying Circuit Switch calls of said subscribers,

**2.** R-IM-SSF gateway according to claim 1, **characterized in that** each of its instances is associated to an R-IM-SSF instance identifier which is represented by a Session Control Function address contained into a Subscriber Information mark or an Intelligent Network Application Part mark which is stored into a storing means of a network equipment of said circuit switched network (PN) in correspondence with at least one identifier of a subscriber concerned by a Circuit Switch call.

**3.** R-IM-SSF gateway according to claim 2, **characterized in that**, when said circuit switched network (PN) is of a mobile or cellular type, each of its instances is associated to an R-IM-SSF instance identifier represented by a Session Control Function address contained into a Subscriber information mark or an Intelligent Network Application Part mark which is stored into a storing means of a network equipment called Home Location Register (HLR).

**4.** R-IM-SSF gateway according to claim 2, **characterized in that**, when said circuit switched network (PN) is of a wired type, each of its instances may be associated to an R-IM-SSF instance identifier represented by a Session Control Function address contained into a Subscriber Information mark or an Part mark which the concerned SCP.

**5.** R-IM-SSF gateway according to claim 1, **characterized in that**, when said communication system further comprises an IMS environment (ID), each of its instances is arranged for acting as an IMS S-CSCF node.

**6.** R-IM-SSF gateway according to 5, **characterized in that** it is arranged for searching an IMS application server (ASj) associated with a subscriber concerned by a Circuit Switch call, into a storing means (HSS) of said IMS environment (ID) called Home Subscriber Server and which is arranged for storing each subscriber identifier in correspondence with an IMS application server identifier.

**7.** R-IM-SSF gateway according to claim 6, **characterized in that** each of its instances is associated to an R-IM-SSF instance identifier which is associated to at least one identifier of a subscriber concerned by a Circuit Switch call and put into said Home Subscriber Server (or HSS).

**8.** R-IM-SSF gateway according to claim 7, **characterized in that** each of its R-IM-SSF instances is arranged for providing dynamically said Home Subscriber Server (HSS) with its R-IM-SSF instance identifier when it has been triggered by an underlying Service Switch Function of said circuit switched network (PN) to control the Circuit Switch call of said subscriber.

**9.** R-IM-SSF gateway according to claim 5, **characterized in that** it is arranged for detecting that particular received SIP messages are not related to underlying IN call control messages, and in this case to relay these particular SIP messages to an R-IM-SSF gateway instance using IMS session level routing mechanisms,

**10.** R-IM-SSF gateway according to claim 9, **characterized in that** said particular messages are chosen from a group comprising at least a SIP SUBSCRIBE message and a SIP NOTIFY message.

**11.** R-IM-SSF gateway according to claim 1, **characterized in that**, when said communication system does not comprise an IMS environment (ID), each of its instances comprises an internal storing means intended for storing the identifier of each subscriber that is associated to it in correspondence with
